# EUROPEAN PATENT APPLICATION

(11) **EP 4 789 848 A1**
(43) Date of publication of application: **12.08.2026**
(21) Application number: 26157432.1
(22) Date of filing: 10.02.2026
(51) Int. Cl.: B29C 65/20, B29C 65/78, E06B 3/96, B29K 27/06, B29L 31/00

(54) **APPARATUS FOR WELDING PROFILED BARS**

(30) Priority: 11.02.2025 IT 202500002559
(71) Applicant: Emmegi S.p.A., 41019 Soliera (Modena) (IT)
(72) Inventor: TAMAGNINI, Marco, 47838 Riccione (RIMINI) (IT); ARRONDINI, Cesare, 61122 Pesaro (IT)
(74) Representative: Colò, Chiara

(57) **Abstract**

An apparatus for welding profiled bars comprises a heating plate (24) and
gripping units (4, 5) arranged to grip profiled bars (2, 3) for pushing the end portions (6, 7) thereof against the heating plate (24) and against each other.

Each gripping unit (4, 5) comprises an arrangement of machine parts (8) independent of the geometry of the profiled bars (2, 3) to be welded. Each gripping unit (4, 5) comprises a stabilising element (17) suitable for engaging with a side face (12) of a profiled bar (2, 3), and further, an upper containment element (25) and a lower containment element (26).

Each one of the upper and lower containment elements (25, 26) is supported by the arrangement of machine parts (8) independently from the stabilising element (17).

The apparatus prevents beads forming outside the profiled elements, and may be used to weld window frames.

## Description

The invention relates to an apparatus for joining together profiled bars by welding, particularly so as to obtain frames for doors and windows.

The apparatus according to the invention is particularly suitable for joining profiled bars made of polyvinyl chloride (PVC), but may also be used for joining together profiled bars made of polymeric material different from PVC, or from composite material, or provided with reinforcing elements made of metallic material. In general, the apparatus according to the invention can be used for joining together profiled bars which can be welded to each other by applying heat and pressure.

In the building sector, PVC doors and windows are widely used and comprise frames which are made from profiled bars cut to a desired length and joined together by welding. During welding, the ends of two PVC profiled bars are heated so that the relative material softens locally, then pressed together to join the bars permanently. In this way, a welding seam is formed in the joining area between the profiled bars, shaped like a bulge that protrudes the outside of the profiled bars.

Having a welding seam protruding to the outside is aesthetically unsightly. For this reason, the part of the welding seam that protrudes outwards is removed on a special machine, called a "cleaning machine", with additional processing that results in a lengthening of the working times and an increase in costs.

Solutions have been studied to prevent, during the welding of profiled bars made of polymeric material, a welding seam from forming that protrudes outside the profiled polymer bars during welding.

EP 3517279 discloses one of these solutions. In particular, according to EP 3517279, the profiled bars to be joined are subjected to a preliminary operation for removal of material, thanks to which a seat is formed on an upper face and on a lower face of the profiled bars, arranged in the joining area along which the two profiled bars will be joined.

As shown in Figure 1, in the machine disclosed in EP 3517279, during welding, each profiled bar 100 is supported by a supporting device 101 comprising a containment element to contain the material softened during the welding. When the profiled bars to be welded are pushed together, the containment elements of the respective supporting devices make contact with each other, preventing the softened polymeric material from flowing outside the profiled bars. Each containment element floats along a direction parallel to the longitudinal axis of the corresponding profiled bar, which allows the containment elements to be kept in mutual contact during all the steps of the welding process. In this way, a welding seam is formed that does not protrude outside the profiled bars. As a result, it is no longer necessary to remove the protruding part of the welding seam on the cleaning machine.

In the apparatus according to EP 3517279, the supporting devices 101 on which the containment elements are mounted are the so-called "counter shapes", that is, accessory components that are attached in a removable way to a base of the apparatus, for example by means of magnetic fixtures. These components are replaced when the type of profiled bar to be welded changes, as their shape and their dimensions are closely linked to the shape and dimensions of the profiled bars to be welded.

Each supporting device 101 comprises a lower part 102 and an upper part 103, between which the profiled bar to be welded is positioned. The lower part 102 supports a lower containment element, while the upper part 103 supports an upper containment element.

Although the apparatus described in patent document EP 3517279 is effective in preventing a welding seam from being formed which protrudes outwardly from the profiled bars, it can be improved in other respects.

In particular, in order to machine profiled bars of different types, it is necessary to keep in stock a large number of supporting devices 101, which are relatively expensive and bulky, since each comprises the lower and upper containment elements together with the components that make it possible to move the lower and upper containment elements.

Further, when the supporting devices 101 are mounted on the welding apparatus, the lower part 102 and the upper part 103 occupy a significant space along a vertical direction, which limits the maximum dimension of the cross-section of the profiled bar that can be processed by the apparatus described in patent document EP 3517279.

Another known apparatus for welding profiled bars is described in patent document DE 102016102240.

An object of the invention is to improve the known apparatuses for welding profiled bars made at least partially of polymeric material.

A further object is to provide an apparatus that enables profiled bars to be welded substantially without creating a welding seam that protrudes towards the outside of the profiled bars, thereby allowing an increase in the transversal section of the weldable profiled bars compared with the state of the art.

Another object is to reduce costs, and simplify the management, of the components to be kept in stock to allow welding of profiled bars with transversal sections of different shapes and dimensions.

Yet another object is to improve the aesthetic appearance of the welding not only at the upper and lower faces of the profiled bars, but also at least at one side face.

According to the invention, an apparatus is provided for welding profiled bars, comprising:
- a heating plate;
- a gripping unit and a further gripping unit each of which is intended to grip an end portion of a profiled bar and respectively of a further profiled bar to push the end portions against the heating plate in order to soften the material of the profiled bar and of the further profiled bar at the end sections, and subsequently to push the end portions against each other in order to join the profiled bar and the further profiled bar,

wherein each gripping unit comprises an arrangement of machine parts independent of the geometry of the profiled bars to be welded,
and wherein each gripping unit comprises a stabilising element suitable for engaging in shape coupling with a side face of a profiled bar to keep the profiled bar in a stable position during the welding, the stabilising element being replaceable with a different stabilising element if the geometry of the profiled bars to be welded changes,
wherein the gripping unit and the further gripping unit each comprise an upper containment element and a lower containment element, the upper containment elements of the gripping unit and of the further gripping unit being positionable in mutual contact during the welding, the lower containment elements of the gripping unit and of the further gripping unit being positionable in mutual contact during the welding,
and wherein each upper containment element and each lower containment element is supported by the arrangement of machine parts independently from the stabilising element.

In other words, according to the invention there is provided an apparatus for welding profiled bars, comprising:
- a heating plate;
- a gripping unit and a further gripping unit each of which is intended to grip an end portion of a profiled bar and, respectively, of a further profiled bar for pushing the end portions against the heating plate, or for pushing the end portions against each other,

wherein each gripping unit comprises an arrangement of machine parts independent of the geometry of the profiled bars to be welded,
and wherein each gripping unit comprises a stabilising element suitable for engaging with a side face of a profiled bar for keeping the profiled bar in a stable position during the welding,
wherein the gripping unit and the further gripping unit each comprise an upper containment element and a lower containment element, the upper containment elements of the gripping unit and of the further gripping unit being positionable in mutual contact during the welding, the lower containment elements of the gripping unit and of the further gripping unit being positionable in mutual contact during the welding,
and wherein each upper containment element and each lower containment element is supported by the arrangement of machine parts independently from the stabilising element.

Thanks to the invention, it is possible to join two profiled bars by welding, substantially without a welding seam protruding outwards from the profiled bars from being formed, at least at the faces of the profiled bars that interact with the lower containment elements and with the upper containment elements.

The lower containment elements and the upper containment elements contain the softened material of the profiled bars, delimiting the welding seam below and above and preventing the welding seam from widening uncontrollably outside the profiled bars, at least near the faces of the profiled bars on which the containment elements act.

This eliminates the need to remove the outer parts of the welding seam on the welded profiled bars, which reduces the cycle time and lowers costs of the welding line, since the cleaning machine is unnecessary.

In the prior art, the containment elements were supported by the so-called "counter-shapes"; that is, by accessory components that had to be replaced as the type of profiled bars to be welded changed.

On the contrary, in the apparatus according to the invention, the lower and upper containment elements are mounted directly on the arrangement of machine parts, that is to say, on components of the apparatus which are not replaced when the type of profiled bars to be welded varies, in particular the shape and dimensions of their cross-sections.

The lower and upper containment elements are disconnected from the stabilising element.

In this way, the structure of the accessory components linked to the type of profiled bars to be welded is greatly simplified, and in particular the so-called counter-shapes, which no longer serve as support for the containment elements but merely stabilise the profiled bars on the apparatus that welds the profiled bars.

The counter-shapes of the prior art can thus be replaced by stabilising elements of reduced dimensions, which no longer need to interact with an upper face and a lower face of the profiled bars, but engage only with a side face to keep them in a stable position.

The dimensions of the stabilising elements replacing the prior art counter-shapes are also decreased, in particular the dimensions of the stabilising elements along a direction extending vertically when these elements are mounted on the welding apparatus.

In fact, the stabilising elements used in the apparatus according to the invention do not need to extend above or below the profiled bars to be welded, but can be provided only on one side, more specifically on the outer side of the profiled bars.

This makes more free space available in a direction extending vertically on the welding apparatus, which makes it possible to weld profiled bars whose cross-section has a relatively large dimension. In addition, thanks to their reduced size, the space occupied in the warehouse by the stabilising elements is reduced, which makes it possible to simplify the management of spare parts.

In one version, the arrangement of machine parts of each gripping unit comprises a supporting base for receiving the end portion of the corresponding profiled bar.

In one version, the arrangement of machine parts of each gripping unit comprises a presser movable towards the supporting base along a movement direction to clamp the corresponding profiled bar between the supporting base and the presser.

Each lower containment element can be fixed to the corresponding supporting base in such a way as to be movable with respect to the supporting base transversely, for example perpendicularly, to the movement direction.

In this way, the lower containment elements can remain in mutual contact during welding, which prevents the escape of softened material underneath the profiled bars.

Each upper containment element can be fixed to the corresponding presser in such a way as to be movable with respect to the presser transversely, for example perpendicularly, to the movement direction.

**In** this way, the upper containment elements can remain in contact with each other during welding, which prevents the escape of softened material above the profiled bar.

**In** one version, the gripping unit and the further gripping unit each comprise a lateral containment element, associated with the respective stabilising element, the lateral containment elements being configured to abut during a welding step so as to contain the softened material on a side face of the profiled bars.

In this way, it is possible to prevent the welding seam from protruding outwards even at a lateral edge of the joining zone that originates during the welding of the profiled bars.

This makes the appearance of the profiled bars even more aesthetically pleasing after welding.

The invention can be better understood and implemented with reference to the accompanying drawings which illustrate a non-limiting example embodiment of it and in which:
Figure 1 is a partly exploded perspective view showing a welding head for joining together two profiled bars according to the prior art;
Figure 2 is a partly exploded perspective view showing a welding head which incorporates the invention;
Figure 3 is a perspective view showing the welding head of Figure 2 on which two profiled bars are positioned;
Figure 4 is a view, partially sectioned along a vertical plane, showing a welding head in an operating configuration;
Figure 5 is a cross-section along the plane IV-IV of Figure 4;
Figure 6 is a schematic cross-section on a vertical plane showing a step for loading two profiled bars to be welded;
Figure 7 is a schematic cross-section along the plane VII-VII of Figure 6;
Figure 8 is a schematic cross-section like that of Figure 6, showing the profiled bars during a positioning step;
Figure 9 is a schematic cross-section along the plane IX-IX of Figure 8;
Figure 10 is a schematic cross-section like that of Figure 6, showing the profiled bars spaced apart from each other and positioned in a locked position before welding;
Figure 11 is a schematic cross-section along plane XI-XI of Figure 10;
Figure 12 is a schematic cross-section like that of Figure 6, showing a softening start step of respective end sections of the profiled bars;
Figure 13 is a schematic cross-section along the plane XIII-XIII of Figure 12;
Figure 14 is a schematic cross-section like that of Figure 6, showing a softening end step of the end sections of the profiled bars;
Figure 15 is a schematic cross-section along the plane XV-XV of Figure 14;
Figure 16 is a schematic cross-section like that of Figure 6, showing the profiled bars spaced from one another and having respective softened end sections;
Figure 17 is a schematic cross-section along plane XVII-XVII of Figure 16;
Figure 18 is a schematic cross-section like that of Figure 6, showing the profiled bars in an end of welding position;
Figure 19 is a schematic cross-section along the plane XIX-XIX of Figure 18;
Figure 20 is a schematic perspective view showing two profiled bars joined to each other to obtain a welded joint.

In the following description, terms such as "upper", "lower", "above", "below", "side" refer to the arrangement of the profiled bars on the welding apparatus and not to their position during installation or use.

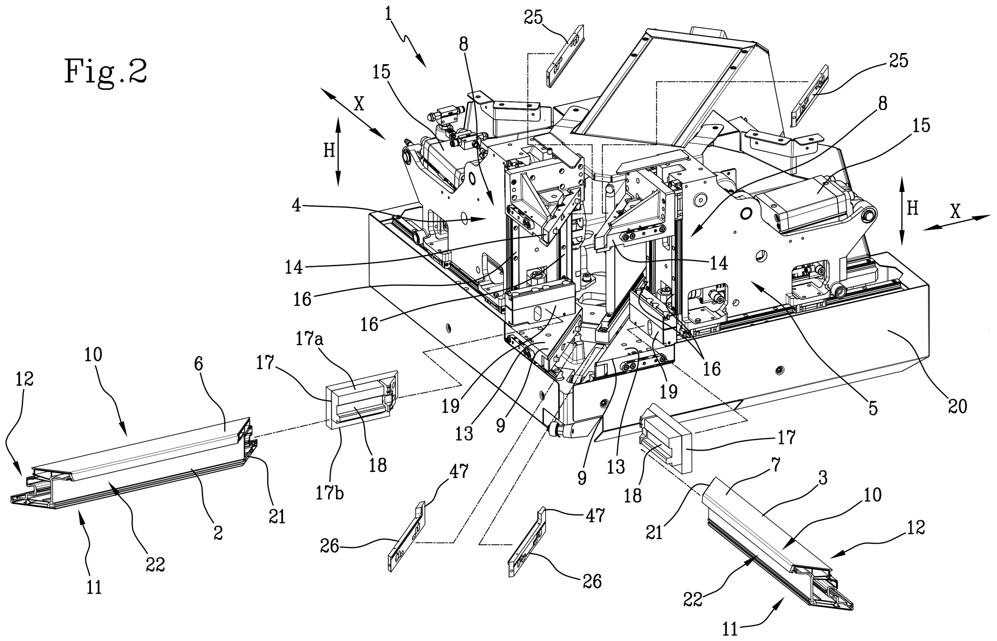

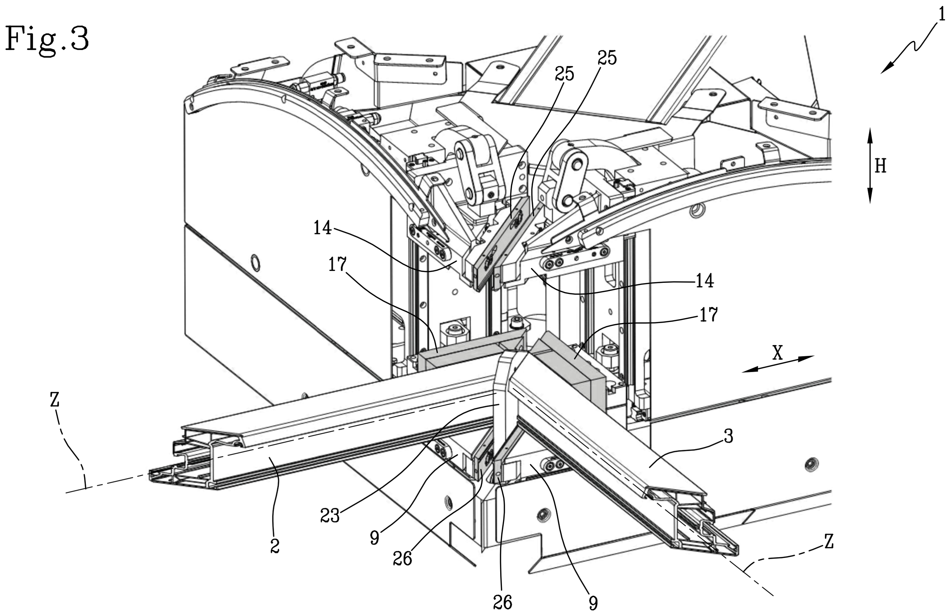

Figures 2 and 3 show a welding head 3 for joining together a profiled bar 1 and a further profiled bar 2 by welding. The profiled bar 2 and the further profiled bar 3 are intended, in particular, to form a frame of a door or window unit, after having been joined to another two profiled bars, not shown. The door or window frame formed by joining the profiled bars can be a frame intended to be fixed to a wall, or a leaf supported by it.

The profiled bar 2 and the further profiled bar 3 may be made of polymeric material, particularly polyvinyl chloride (PVC). However, it is also possible to use the welding head 1 for welding profiled bars made of polymeric materials different from PVC, or composite materials, or having an outer structure made of PVC or another polymeric material and an internal metal reinforcement, for example made of aluminium.

Each profiled bar 2, 3 comprises a first face 10 and a second face 11, opposite the first face 10. In the example shown, the first face 10 is an upper face of the profiled bar 2 or, respectively, of the further profiled bar 3, while the second face 11 is a lower face of the profiled bar 2 or, respectively, of the further profiled bar 3. An outer side face 12 and an inner side face 22 are interposed between the first face 10 and the second face 11. The first face 10 and the second face 11 are intended to remain visible after installation of the door or window in a building. The outer face 12 is intended to face the outside of the frame, while the inner face 22 is intended to face the inside of the frame.

The first face 10, the second face 11 and the side faces 12, 22 may have various shapes, not necessarily flat.

Each profiled bar 2 and 3 extends along a corresponding longitudinal axis Z, visible, for example, in Figure 3.

Both the profiled bar 2 and the further profiled bar 3 are hollow inside.

The welding head 1 is configured to join the profiled bar 2 to the further profiled bar 3 in such a way that the longitudinal axes Z of the profiled bar 2 and of the further profiled bar 3 are positioned transversally, in particular perpendicularly, relative to each other. The profiled bar 2 and the further profiled bar 3 are therefore joined together to form an angle which, in the example shown, is equal to 90°.

More in detail, the welding head 1 is configured to join the profiled bar 2 to the further profiled bar 3 along a joining perimeter covering all the faces of the profiled bar 2 and of the further profiled bar 3. In other words, the welding head 1 is configured to form, at the interface between the profiled bar 2 and the further profiled bar 3, a welding seam which extends in a joining zone between the first faces 10, in a joining zone between the second faces 11 and a joining zone between the side faces 12, 22 of the profiled bar 2 and of the further profiled bar 3.

As described in more detail below, the welding head 1 makes it possible to minimise, or even prevent, the visibility of the welding seam, in particular on the first faces 10 and on the second faces 11 of the profiled bars 2, 3.

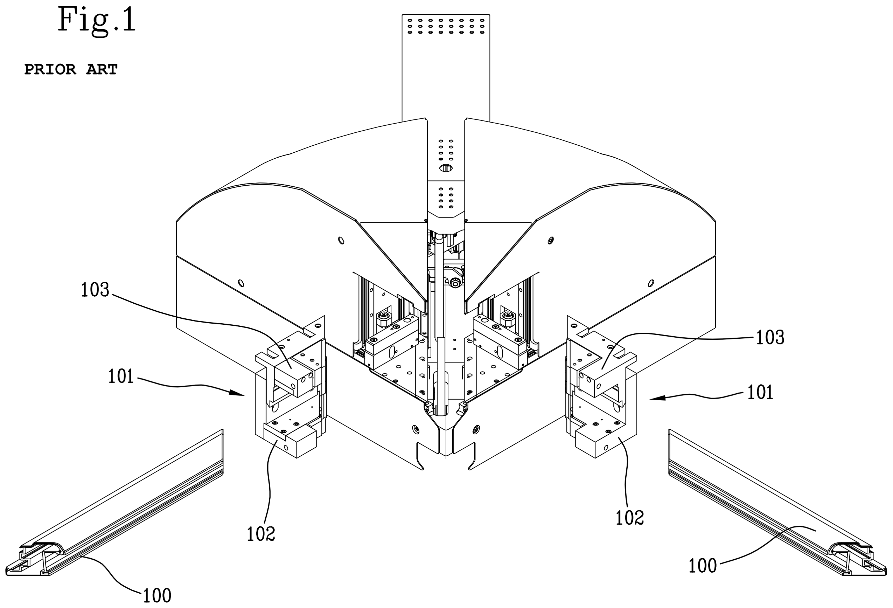

The welding head 1 may be included in a welding machine comprising four welding heads, each of which is similar to the welding head 1 shown in Figures 1 and 2. In this case, the welding machine allows a frame of door or window units to be rapidly formed, since each welding head is positioned to join, by welding, two adjacent profiled bars, so that the four corners of the frame are formed simultaneously.

Alternatively, the welding head 1 may form part of a welding machine comprising a single welding head 1, or comprising two welding heads 1.

The welding head 1 comprises a gripping unit 4 and a further gripping unit 5, arranged to grip respectively an end portion 6 of the profiled bar 2 and a further end portion 7 of the further profiled bar 3. The gripping unit 4 and the further gripping unit 5 are also configured to move the end portion 6 and the further end portion 7 relative to each other during the welding process. Each gripping unit 4, 5 comprises an arrangement 8 of machine parts that allows different types of profiled bars to be processed. The welding head 1 can in fact be used to join profiled bars with transversal sections whose shapes and dimensions vary from one profiled bar to another. If the shape and/or section of the profiled bars to be welded vary between two successive welding cycles, the arrangement 8 of machine parts need not be replaced.

The arrangement 8 of machine parts for each gripping unit 4, 5 comprises a supporting base 9 intended to receive and support the end portion 6 of the profiled bar 2 or the further end portion 7 of the further profiled bar 3. The supporting base 9 is delimited by a supporting surface 13, which can be substantially flat and horizontal, on which the end portion 6 or the further end portion 7 is supported. In particular, the second face 11 of each profiled bar 2, 3 is intended to be rested on the supporting surface 13 of the corresponding gripping unit 4, 5.

The arrangement 8 of machine parts of each gripping unit 4, 5 further comprises a presser 14 which can be positioned above the corresponding profiled bar 2, 3 for pushing the profiled bar 2, 3 against the supporting base 9, so that the end portion 6 of the profiled bar 2, or the further end portion 7 of the further profiled bar 3, is locked between the supporting base 9 and the presser 14. Each presser 14 is in particular configured to abut on the first face 10 of the corresponding profiled bar 2, 3.

Each presser 14 faces the corresponding supporting base 9 so that the end portion 6 of the profiled bar 2, or the further end portion 7 of the further profiled bar 3, can be received between the supporting base 9 and the presser 14.

Each presser 14 is movable towards or away from the supporting base 9 in a movement direction H which, in the example shown, is vertical. For this purpose, the gripping unit 4 and the further gripping unit 5 each comprise an actuator 15 configured to move the corresponding presser 14 along respective guides 16 extending in the movement direction H.

Each presser 14 is, in particular, movable between a disengagement position, in which the corresponding profiled bar 2, 3 can be freely moved between the supporting base 9 and the presser 14, and a locking position, in which the presser 14 locks the profiled bar 2, 3 against the supporting base 9, so as to prevent movements of the profiled bar 2, 3 with respect to the corresponding gripping unit 4, 5.

Each gripping unit 4, 5 further comprises a stabilising element 17 to hold the corresponding profiled bar 2, 3 in a stable position during the welding process. The profiled bars 2, 3 can in fact have very complicated shapes and it can happen that the second face 11 does not have a flat geometry. In this case, when the profiled bar 2, 3 is clamped between the supporting base 9 and the presser 14, the profiled bar 2, 3 could be arranged in an undesired inclined configuration, in particular by rotating around the relative longitudinal axis Z.

The stabilising element 17 prevents this from happening, engaging in shape coupling with the outer side face 12 of the profiled bar 2 or of the further profiled bar 3. For this purpose, the stabilising element 17 has a coupling surface 18, shaped in a complementary manner with respect to the outer side face 12, against which the outer side face 12 is abutted before the corresponding profiled bar 2, 3 is locked between the supporting base 9 and the presser 14.

In a version not shown, the coupling surface 18 may be configured such that it engages in shape coupling only with a portion of the outer side face 12. For example, the coupling surface 18 could define a lateral supporting surface for the profiled bar, without, however, completely copying its shape, in particular in the case of profiled bars having a cross-section of a complicated shape and/or whose outer side face 12 does not remain in view after the installation of the frame.

In any case, the stabilising element 17 is an element to be replaced when the type of profiled bars to be welded is changed, that is, when the profiled bars positioned on the welding head 1 have a cross section different from that of the profiled bars previously processed. In other words, the stabilising element 17 is an accessory element that depends on the format of the profiled bars to be welded.

On the contrary, the components of arrangement 8 of the machine parts are included in the basic set-up of the apparatus, which comprises the welding head 1, and do not depend on the format of the profiled bars to be joined. The stabilising element 17 can also be called a " counter-shape" as it has a shape complementary to the shape of the bar to be welded with which it engages.

In one version, as shown in Figure 2, the stabilising element 17 can be made in two parts. In this case, the stabilising element 17 comprises a shaped part 17a on which the coupling surface 18 is formed. The stabilising element 17 may further comprise a supporting part 17b for supporting the shaped part 17a. The shaped part 17a can be movable with respect to the supporting part 17b along a direction parallel to the movement direction H, that is - in the example shown - along a vertical direction.

The degree of freedom of the shaped part 17a parallel to the movement direction H allows the welded profiled bars to be extracted from the welding head 1 even when the section of the bars has undercut portions on the outer side face 12.

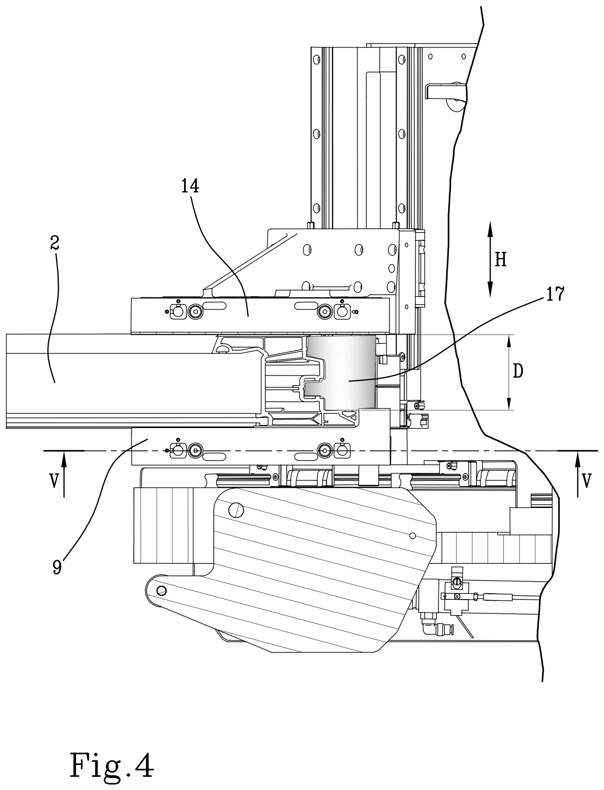

An example of this type is visible in Figure 4, in which the stabilising element 17 is schematically shown to highlight its outer perimeter and the modes of engagement with a profiled bar 2, in a configuration in which the profiled bar 2 is clamped between the supporting base 9 and the presser 14. It should be noted that the transversal section of the profiled bar 2 has hollow parts in which protruding parts of the stabiliser element 17 engage in a shape coupling.

This condition is not, however, necessary, and in some cases the stabilising element 17 could engage with the profiled bar 2, acting as a lateral support for the profiled bar, without, however, having protruding parts that engage in the hollow parts of the profiled bar 2.

When the welding process is completed and the profiled bars 2, 3, joined together, must be removed from the welding head 1, the presser 14 moves away from the supporting base 9 to disengage the corresponding profiled bar from the respective gripping unit. At this point, the profiled bars 2 and 3, joined together, are lifted to be extracted from the welding head 1. The shaped part 17a of the stabilising element 17, sliding parallel to the movement direction H with respect to the supporting part 17b, follows the profiled bars 2, 3 whilst the latter are raised, enabling the disengagement from the welding head 1.

The arrangement of machine parts 8 further comprises a supporting block 19 for supporting the stabilising element 17. The supporting block 19 is fixed with respect to the supporting base 9. The stabilising element 17 is fixed to the supporting block 19 by a removable coupling system, for example by means of magnetic fixtures and/or threaded elements.

When the transversal section of the profiled bars to be welded is changed, the stabilising element 17 is removed and replaced with a new stabilising element 17 the coupling surface 18 of which has a shape corresponding to that of the new profiled bars to be welded.

During operation of the welding head 1, the longitudinal axis Z of the profiled bar 2 is positioned transversally, in particular perpendicularly, to the longitudinal axis Z of the further profiled bar 3.

The welding head 1 allows the profiled bar 2 to be joined to the further profiled bar 3 at respective end sections 21, each of which is (in the example shown) positioned on a plane inclined at 45° to the longitudinal axis Z of the profiled bar 2 or of the further profiled bar 3.

The welding head 1 comprises a contact element 23, shown for example in Figure 3, shaped in particular like a plate, which can be inserted between the end sections 21 of the profiled bar 2 and of the further profiled bar 3 during a step of positioning the profiled bar 2 and the further profiled bar 3 on the welding head 1. In particular, the contact element 23 can be inserted between the end sections 21 before the profiled bar 2 and the further profiled bar 3 are respectively clamped by the gripping unit 4 and the further gripping unit 5.

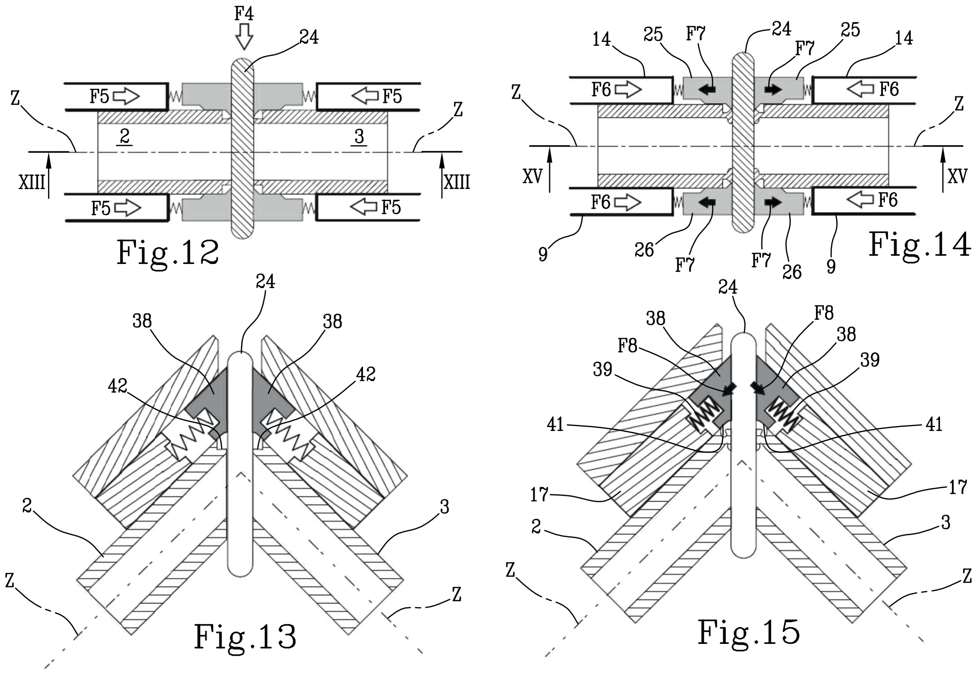

The welding head 1 also comprises a heating device which includes a heating plate 24, visible in Figures 12 to 15, suitable for being interposed between the end sections 21 of the profiled bar 2 and of the further profiled bar 3, so as to heat the material which forms the profiled bar 2 and the further profiled bar 3, at the end sections 21. The profiled bars 2, 3 are thus locally softened.

The contact element 23 and the heating plate 24 are movable so as to be able to be inserted between the end sections 21 of the profiled bars 2, 3, or alternatively away from the end sections 21.

The gripping unit 4 and the further gripping unit 5 are movable with respect to each other so as to bring the end portion 6 and the further end portion 7 of the profiled bars to be joined closer together, or alternatively, further apart. For this purpose, the gripping unit 4 and the further gripping unit 5 are associated with respective actuation means, not shown in the drawings, housed inside a base structure 20 of the welding head 1. The actuation means are configured to move each gripping unit 4, 5 along a displacement direction X which, in the example shown, is horizontal. The displacement direction X is parallel to the longitudinal axis Z of the profiled bar 2, 3 positioned on the corresponding gripping unit 4, 5 to be welded.

Thanks to the actuation means, the end sections 21 of the profiled bars 2, 3 can be brought into abutment with the contact element 23, or with the heating plate 24, or even against each other to be joined together, as will be described in more detail below.

Each gripping unit 4, 5 also comprises a pair of containment elements for locally containing the softened material of the profiled bars 2, 3 close to the respective end sections 21, preventing unwanted escape of the material after the end sections 21 have interacted with the heating element 24.

In particular, an upper containment element 25 and a lower containment element 26 are provided are provided for each gripping unit 4, 5.

The upper containment element 25 is positioned to contain the softened material in a joining zone between the profiled bar 2 and the further profiled bar 3 on the first face 10. The lower containment element 26 is, on the other hand, positioned to contain the softened material in a joining zone between the profiled bar 2 and the further profiled bar 3 on the second face 11. Each containment element 25, 26 is directly supported by the arrangement of parts 8 of the corresponding gripping unit 4, 5. In particular, the upper containment element 25 is supported by the presser 14 of the corresponding gripping unit 4, 5. The lower containment element 26 is, on the other hand, supported by the supporting base 9 of the corresponding gripping unit 4, 5.

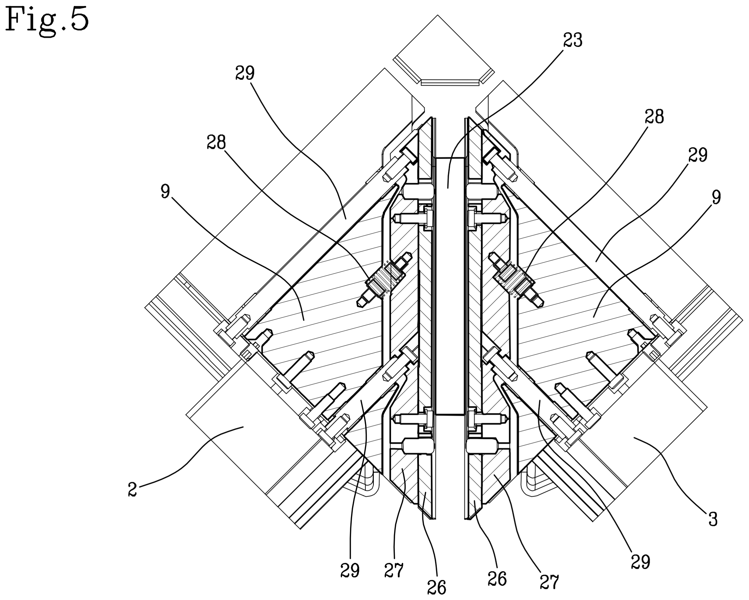

The lower containment element 26 is mounted on the supporting base 9 in such a way as to be movable along a direction parallel to the longitudinal axis Z of the corresponding profiled bar 2, 3. As shown in Figure 5, each lower containment element 26 may be secured, for example by screws, to a supporting element 27. The latter is supported by the supporting base 9 with the interposition of at least one elastic element 28, which in the example shown comprises a helical spring. One or more guide elements 29 are also provided to keep the lower containment element 26 guided with respect to the supporting base 9 in a direction parallel to the longitudinal axis Z of the profiled bar 2, 3. In the example shown, each guide element 29 is shaped like a guide pin extending parallel to the longitudinal axis Z of the profiled bar positioned on the gripping unit 4, 5, inside a hole or a seat formed in the supporting base 9.

The elastic element 28 keeps the lower containment element 26 in an extended position,that is, it is configured to the lower containment element 26 away from the supporting base 9. By applying a compressive force to the elastic element 28, the latter is shortened and the lower containment element 26 is brought closer to the supporting base 9.

The lower containment element 26 is thus floats in a direction parallel to the longitudinal axis Z of the profiled bar 2 or of the further profiled bar 3.

More generally, the lower containment element 26 can be mounted on the supporting base 9 so that it is movable relative to the supporting base 9 along a direction transversal to the movement direction H, not necessarily parallel to the longitudinal axis Z of the corresponding profiled bar 2, 3. In particular, the lower containment element 26 can be mounted on the supporting base 9 in such a way as to be movable with respect to the latter perpendicularly to the movement direction H, that is, horizontally.

For example, the lower containment element 26 could be mounted on the supporting base 9 so as to be movable with respect to the latter along a direction perpendicular to the end section 21 of the corresponding profiled bar 2, 3.

Also in these cases, at least one elastic element is interposed between the supporting base 9 and the lower containment element 26, allowing the lower containment element 26 to float relative to the supporting base 9 in the desired direction, transversely to the movement direction H.

In a version not shown, elastic elements other than the coil spring and/or guide elements other than the guide pin can be used.

The upper containment element 25 is mounted on the presser 14 in a manner similar to that previously described with reference to the lower containment element 26. In other words, the upper containment element 25 is also mounted so as to float, so that it is movable along the longitudinal axis Z with respect to the presser 14. Also in this case, at least one elastic element is provided acting on the upper containment element 25 and at least one guide element.

More generally, the upper containment element 25 can be mounted on the presser 14 so that it can move relative to the presser 14 along a direction transversal to the movement direction H, not necessarily parallel to the longitudinal axis Z of the corresponding profiled bar 2, 3. In particular, the upper containment element 25 can be mounted on the presser 14 in such a way as to be movable with respect to the latter perpendicularly to the movement direction H, that is, horizontally.

For example, the upper containment element 25 could be mounted on the presser 14 in such a way as to be movable with respect to the latter along a direction perpendicular to the end section 21 of the corresponding profiled bar 2, 3.

Also in these cases, between the supporting base 9 and the upper containment element 25 there is interposed at least one elastic element that allows the upper containment element 25 to float with respect to the presser 14 in the desired direction, transversely to the movement direction H.

The containment elements 25 and 26 are independent of the stabilising element 17 and disconnected from the latter.

Consequently, it is possible to replace the stabilising element 17 without intervening in the containment elements 25 and 26. The same containment elements 25 and 26 can also be used in combination with different stabilising elements 17.

The upper containment elements 25 and the lower containment elements 26 can be replaced with containment elements of different shapes and dimensions if the need arises. It is, however, possible to optimise the design of the upper containment elements 25 and lower containment elements 26 so that the same upper and lower containment elements can also be used to weld profiled bars with different transversal sections, in particular if the differences between the transversal sections of the various profiled bars are not excessive.

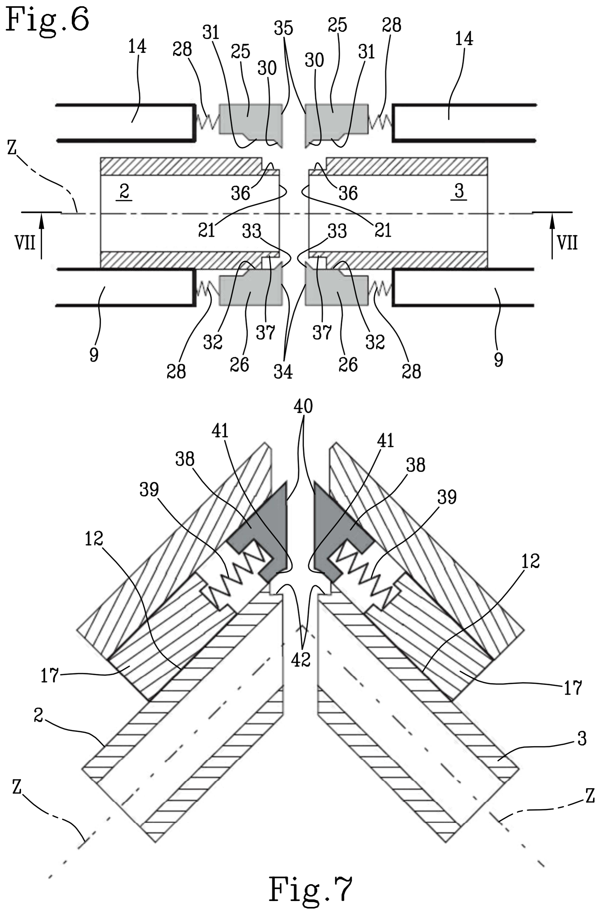

As shown in Figure 6, the upper containment elements 25 are each delimited by a first surface 31 positioned to face, during use, the first face 10 of the profiled bar 2 or of the further profiled bar 3.

Similarly, each lower containment element 26 is delimited by a second surface 32 positioned to face, during use, the second face 11 of the profiled bar 2 or of the further profiled bar 3.

In more detail, the first surface 31 and the second surface 32 are slidable, with a small clearance, respectively along the first face 10 and the second face 11, when the corresponding containment element 25, 26 moves in a floating manner relative to a profiled bar 2, 3.

Each upper containment element 25 can be provided with an upper protrusion 30 which from the first surface 31 projects towards the longitudinal axis Z of the corresponding profiled bar 2, 3, that is, downwards in the example shown.

Similarly, each lower containment element 26 can be provided with a lower protrusion 33 which from the second surface 32 projects towards the longitudinal axis Z of the corresponding profiled bar 2, 3, that is, upwards in the example shown.

As shown in Figure 6, each upper containment element 25 is delimited by an upper contact face 35 positioned transversely, in particular perpendicularly, to the corresponding first surface 31. The upper protrusion 30 is interposed between the upper contact face 35 and the first surface 31. Similarly, each lower containment element 26 is delimited by a lower contact face 34 positioned transversely, in particular perpendicularly, to the corresponding second surface 32. The lower protrusion 33 is interposed between the lower contact face 34 and the second surface 32.

Each protrusion 30 is suitable for being received in an upper seat 36, formed close to the end section 21 of the profiled bar 2 or to the further profiled bar 3.

The upper seat 36 is obtained by removing material, for example by milling, from the first face 10 of the profiled bar 2 or of the further profiled bar 3. The thickness of the first face 10 is therefore reduced in correspondence with the upper seat 36. In fact, the upper seat 36 has a depth less than the thickness of the material of the profiled bar 2, 3.

The upper seat 36 extends on the first face 10, in a direction perpendicular to the longitudinal axis Z of the corresponding profiled bar 2, 3, for a length equal to that of the zone along which it is desired that profiled bar 2 be joined to further profiled bar 3 substantially without the welding seam being visible. Furthermore, each upper seat 36 extends, starting from the end section 21, for a predefined dimension in a direction parallel to the longitudinal axis Z of the profiled bar 2, 3.

Similarly, each lower protrusion 33 is suitable for being received in a lower seat 37, also shown in Figure 6, obtained by removing material, for example by milling, from the second face 11 of profiled bar 2 or of the further profiled bar 3, near the respective end section 21. The lower seat 37 extends on the second face 11, in a direction perpendicular to the longitudinal axis Z of the corresponding profiled bar 2, 3, for a length equal to that of the zone along which it is desired that profiled bar 2 be joined to further profiled bar 3 substantially without the welding seam being visible.

Furthermore, the lower seat 37 has a depth and a dimension, measured parallel to the longitudinal axis Z of the profiled bar 2, 3, similar or equal to the depth and to the corresponding dimension of the upper seat 36.

In one embodiment, it is possible to provide a lateral containment element 38 associated with the stabilising element 17. In this case, each stabilising element 17 supports a lateral containment element 38, with the interposition of an elastic member 39, which pushes the lateral containment element 38 away from the corresponding stabilising element 17.

Each lateral containment element 38 is delimited by a contact face 40, suitable for making contact with the contact face 40 of the lateral containment element 38 on the other profiled bar 2, 3. In use, the contact face 40 can be positioned vertically, such that the contact face 40 supported by one stabilising element 17 faces the contact face 40 supported by the other stabilising element 17.

Each lateral containment element 38 is further delimited by a containment surface 41 which, during operation, faces the profiled bar 2, 3 retained by the gripping unit to which the lateral containment element 38 is associated. Each of the profiled bars 2 and 3 has a lateral seat 42 formed near the end section 21 along the outer side face 12. In operation, the containment surface 41 of the lateral containment element 38 faces the lateral seat 42. During welding, each lateral containment element 38 is movable, with respect to the stabilising element 19 that supports it, along a direction arranged transversely, more specifically perpendicularly, to the movement direction H.

In particular, each lateral containment element 38 is movable horizontally with respect to the corresponding stabilising element 19, for example along the corresponding profiled bar 2, 3.

Each lateral containment element 38 can be moved, with respect to the corresponding stabilising element 19, along a direction parallel to the longitudinal axis Z of the corresponding profiled bar 2, 3.

The operation of the welding head 1 is described below, with reference to Figures 6 to 19. Figures 6, 8, 10, 12, 14, 18 are schematic cross-sections each of which is taken along the vertical planes which contain the longitudinal axes Z of the profiled bar 2 and of the further profiled bar 3, respectively. The cross-section planes have then each been rotated by 45° away from each other, so as to obtain a cross-section lying on the plane of the sheet. Figures 7, 9, 11, 13, 15, 17 and 19 show, on the other hand, the profiled bars 2 and 3 in the orientation they adopt during the welding process.

The profiled bar 2 and the further profiled bar 3 are prepared beforehand, cutting them to the desired length and forming end sections 21 according to the desired shape. In the example of Figure 1 and 2, the profiled bars 2, 3 are cut at 45° relative to the corresponding longitudinal axis Z, so as to form end sections 21 each of which lies in a plane at an angle of 45° to the longitudinal axis Z of the respective profiled bar 2, 3.

After cutting, the upper seat 36 is obtained on the first face 10 of each profiled bar 2, 3, while the lower seat 37 is obtained on the second face 11 of each profiled bar 2, 3. The lateral seat 42 can also be formed, if provided, on the outer side face 12.

As described in detail below, the upper seat 36, the lower seat 37 and the lateral seat 42 have the function of receiving the material of the welding seam that will be formed in a joining zone between the profiled bars 2, 3 on the first faces 10, the second faces 11 and the outer side faces 12, respectively.

The upper seat 36, the lower seat 37 and the lateral seat 42 are formed upstream of welding head 1, in particular upstream of the welding machine which houses the welding head 1.

This avoids complicating the structure of the welding head 1 and/or the welding machine, which must not comprise complicated material removal devices, nor devices for removing chippings.

The profiled bar 2 and the further profiled bar 3 are then positioned on the welding head 1. In particular, as shown in Figure 6, the profiled bar 2 rests on supporting base 9 of the gripping unit 4, while the further profiled bar 3 rests on supporting base 9 of the further gripping unit 5. The outer side face 12 of each profiled bar 2, 3 is in contact with the corresponding stabilising element 17, which keeps it in a stable position.

The pressers 14 are still in the disengagement position, in which, that is, the profiled bars 2, 3 are free to move with respect to the presser 14 and the supporting base 9 of the corresponding gripping unit 5,

The end sections 21 are spaced apart from each other. The upper containment elements 25, the lower containment elements 26 and the lateral containment elements 38 are pushed towards the outside by the corresponding elastic elements 29, 39.

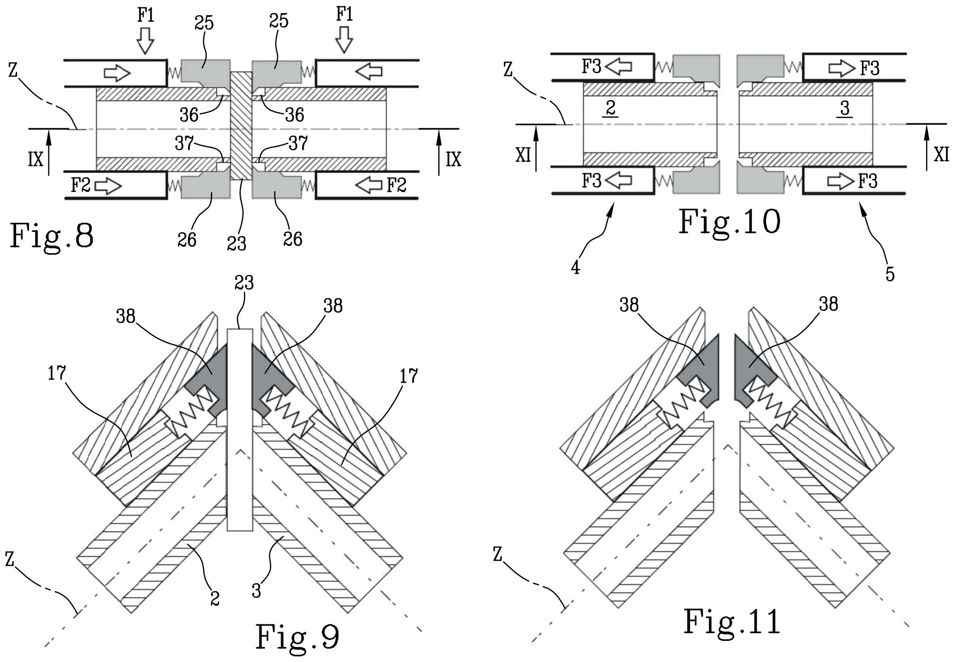

The contact element 23 is now moved into an operating position in which it is interposed between the end sections 21 of the profiled bars 2, 3, as shown in Figure 8.

The profiled bar 2 and the further profiled bar 3 are moved towards the contact element 23, as indicated by the arrows F2 in Figure 8, until the corresponding end sections 21 abut the contact element 23 from opposite sides of the latter.

A positioning step is thus implemented wherein the profiled bars 2, 3 are positioned in a repetitive manner on the welding head 1, positioning them in a predetermined position relative to the contact element 23, with which the end sections 21 are in contact.

As a result of contact between the end sections 21 and the contact element 23, the upper containment elements 25, the lower containment elements 26 and the lateral containment elements 38 (whose ends are normally further forward than the end sections 21) are moved backwards along the profiled bar 2 or the further profiled bar 3. This occurs because contact element 23 exerts a sufficient force on the upper containment elements 25, the lower containment elements 26 and the lateral containment elements 38 to overcome the force of the elastic elements 28 and 39.

In this way, the upper containment elements 25, the lower containment elements 26 and the lateral containment elements 38 do not adversely affect the correct positioning of the profiled bar 2 and the further profiled bar 3 on the welding head 1.

For this reason, towards the end of the positioning step, as shown in Figure 8, the upper containment elements 25 are in contact with opposite faces of the contact element 23. The lower containment elements 26 are also in contact with opposite faces of the contact element 23. The upper protrusions 30 are received in the upper seats 36, while the lower protrusions 33 are received in the lower seats 37. Furthermore, as shown in Figure 9, the lateral containment elements 38 are in contact with opposite faces of the contact element 23.

The end portion 6 of the profiled bar 2 and the further end portion 7 of the further profiled bar 3 are now clamped between the presser 14 and the supporting base 9 of the corresponding gripping unit 4, 5, moving the presser 14 in the movement direction H towards the supporting base 9. This is indicated by the F1 arrows in Figure 8.

As shown by arrows F3 in Figure 10, the gripping unit 4 and the further gripping unit 5 are now moved away from each other to bring them into the position shown in Figures 10 and 11. In this way, the end sections 21 of the profiled bar 2 and of the further profiled bar 3 disengage from the contact element 23, which can thus be moved away from the profiled bars 2, 3.

It should be noted that, after the contact element 23 has moved away from the profiled bars 2, 3, the elastic element 28 associated with each upper containment element 25 and each lower containment element 26 pushes the corresponding upper 25 or lower 26 containment element beyond the end section 21 of the respective profiled bar 2, 3. Similarly, the elastic member 39 associated with each lateral containment element 38 pushes the latter into an advanced position beyond the end section 21 of the corresponding profiled bar 2, 3.

Subsequently, as shown in Figures 12 and 13, the heating plate 24 is inserted between the profiled bar 2 and the further profiled bar 3, as indicated by the arrow F4 in Figure 12.

The gripping units 4, 5 move the profiled bars 2, 3 towards the heating plate 24, as indicated by the arrows F5 in Figure 12, to bring the end sections 21 of the profiled bars 2, 3 into contact with opposite faces of the heating plate 24.

During this step, the heating plate 24 is heated to a predetermined temperature, so as to transfer heat to the end sections 21 of the profiled bar 2 and of the further bar 3 with which it is in contact. The material which forms the bar 2 and the further profiled bar 3 is therefore brought to a relatively high temperature and consequently softened close to the end sections 21. As the material that forms the profiled bar 2 and the further profiled bar 3 is softened in the vicinity of the end sections 21,

The gripping units 4 and 5 further push the profiled bars 2 and 3 towards the heating plate 24, as shown by the arrows F6 in Figure 14. The profiled bars 2 and 3 are consequently further brought closer to the heating plate 24 in such a way as to soften a stretch of the profiled bars 2, 3 having a predetermined length, measured from the original end section 21.

The step described above may be defined as a step of softening the material which forms the profiled bar 2 and the further profiled bar 3 close to the end sections 21.

During the softening phase, the upper containment elements 25 and the lower containment elements 26 are pressed against the heating plate 24. The elastic elements 28 are compressed and the upper containment elements 25 are withdrawn towards the pressers 14, while the lower containment elements 26 are withdrawn towards the supporting bases 9, as shown by the arrows F7 in Figure 14. The upper containment elements 25 prevent the softened material from flowing above the first face 10, while the lower containment elements 27 prevent the softened material from escaping below the second face 11.

The lower protrusions 33 are housed in the lower seats 37 of the profiled bars 2, 3, while the upper protrusions 30 are housed in the upper seats 36 of the profiled bars 2, 3.

The lower protrusions 33 and the upper protrusions 30 move the softened material towards the inside of the profiled bars 2, 3, that is to say, towards the longitudinal axis Z of the profiled bar 2 and of the further profiled bar 3. In other words, the upper protrusions 30 and the lower protrusions 33 act as deflectors which divert the softened material, moving it away from the first face 10 and from the second face 11 and moving it towards the inside of the profiled bars 2, 3, which are hollow inside.

At the start of the softening phase, the lateral containment elements 38 are also pushed into contact with opposite faces of the heating plate 24, as shown in Figure 13. As the profiled bars 2, 3 are pushed towards the heating plate 24 and they shorten because the material with which they are formed softens, the elastic elements 39 are compressed and the lateral containment elements 38 withdraw towards the stabilising elements 17. This is indicated by the arrows F8 in Figure 15. The containment surfaces 41 of the lateral containment elements 38 close the lateral seat 42 from the outside, preventing the softened material from flowing to the outside of the side face 12.

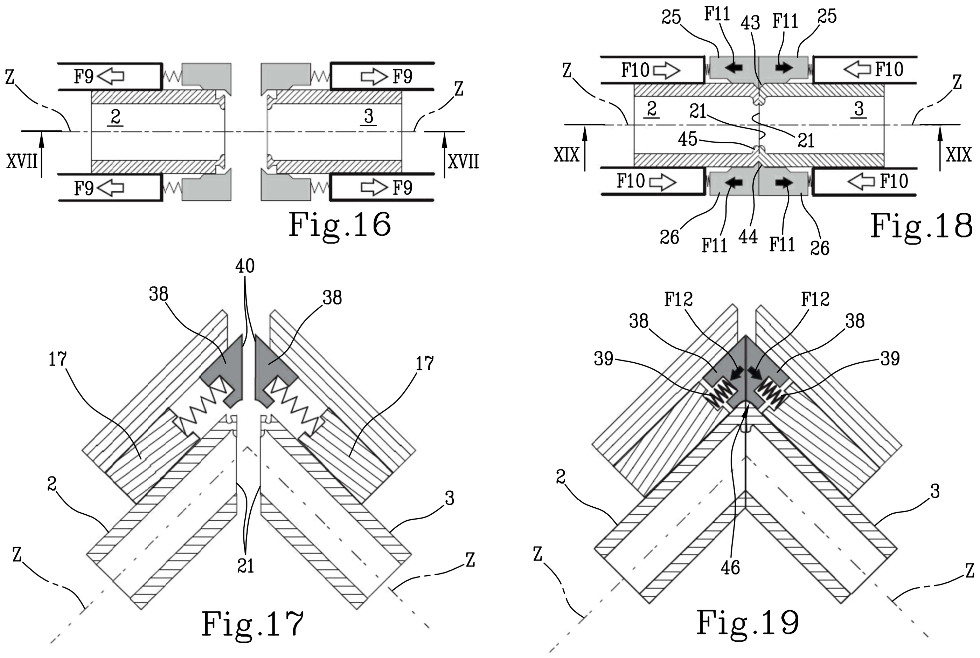

After the softening step, that is after a stretch of predetermined length of the profiled bar 2 and of the further profiled bar 3 has been softened, the gripping units 4, 5 move the profiled bars 2,3 away from the heating plate 24, as shown by the arrows F9 in Figure 16. As a result, the profiled bars 2, 3 detach from the heating plate 24, which can be removed at this time. The end sections 21 of the profiled bars 2, 3 are at this time distanced from each other, while the upper, lower and lateral containment elements 25, 26 and 38, pushed by the elastic elements 28 and the elastic elements 39, protrude beyond the end sections 21.

In the vicinity of the end sections 21, the softened polymeric material which forms the profiled bars 2, 3 moves both towards the inside and the outside of the profiled bars 2 3, but always remains confined within the lower seats 37, the upper seats 36 and the lateral seats 42. This is made possible by the containment action exerted by the upper, lower and lateral containment elements 25, 26 and 38.

The step described above with reference to Figures 16 and 17 can therefore be defined as a step of reciprocal distancing of the profiled bar 2 and of the further profiled bar 3, accompanied by the removal of the heating plate 24. At this point, as shown in Figures 18 and 19, the gripping units 4 and 5 push the profiled bars 2 and 3 against each other, as indicated by the arrows F10 in Figure 18. The end sections 21 of the profiled bar 2 and of the further profiled bar 3 are thus brought into contact with each other.

After the end sections 21 of the profiled bar 2 and of the further profiled bar 3 have been brought into contact with each other, the profiled bar 2 and the further profiled bar 3 are further moved towards each other. In that way, a pressure is applied on the profiled bar 2 and on the further profiled bar 3 such as to weld the profiled bar 2 to the further profiled bar 3. The welding is performed thanks to the joining of portions of the softened material close to the end sections 21. The softened material forms a welding seam 45. During this step, which can be defined as a welding step, the upper containment elements 26 are in contact at their upper abutment faces 35. The lower containment elements 25 are also pressed into contact with each other at their lower abutment faces 34.

The upper protrusions 30 are adjacent to each other and together define an upper penetrating portion 43 that penetrates into the softened material. The upper containment elements 25 thus allow the softened material of the profiled bar 2 and of the further profiled bar 3 to be contained, pushing the softened material towards the longitudinal axis Z of the profiled bar 2 and of the further profiled bar 3. Simultaneously, on the first face 10 of the profiled bars 2, 3, the upper containment elements 25 shape the welding seam 45 from the outside, thanks to the upper penetrating portion 43.

A similar situation occurs in the joining zone along which the second faces 11 of the profiled bar 2 and the further profiled bar 3 are joined. Also in this case, the lower containment elements 26 are in contact with each other during the welding phase, as well as the lower protrusions 33. The latter define together a lower penetrating portion 44, which penetrates into the thickness of the profiled bar 2 and of the further profiled bar 3, forming the corresponding joining zone and pushing the welding seam 45 generated between the second faces 11 entirely inside the profiled bars 2 and 3.

It should be noted that, during the welding phase, the profiled bar 2 and the further profiled bar 3, in addition to being pushed against each other, are moved towards each other by the respective gripping units 4, 5. As this occurs, the upper containment elements 25 are maintained in constant contact with each other, as are the lower containment elements 26. This is made possible by the elastic elements 28 associated with the upper containment elements 25 and the lower containment elements 26, which are compressed (as indicated by the arrows F11 in Figure 18) and keep the upper containment elements 25 in contact with each other, as well as the lower containment elements 26, so as to prevent unwanted escape of softened material from the joining areas between the profiled bar 2 and the further profiled bar 3.

When the profiled bars 2, 3 are brought closer together to enable the welding, the lateral containment elements 38 are also brought into contact with each other, in particular at their abutment faces 40, as shown in Figure 19. When the lateral containment elements 38 are in contact, their containment surfaces 41 are adjacent and delimit from the outside an angular region 46. In the angular region 46, an outer edge zone is received along which the outer side faces 12 of the profiled bars 2, 3 are joined to each other.

As the profiled bars 2, 3 are pressed against each other during the welding phase and their length decreases due to the softening of the polymeric material, the lateral containment elements 39 approach the corresponding stabilising elements 17, moving in a direction parallel to the longitudinal axis Z of the corresponding profiled bar 2, 3. Simultaneously, the elastic elements 39, each extending in a direction parallel to the longitudinal axis Z of the corresponding profiled bar 2, 3, are compressed (as indicated by the arrows F12 in Figure 19) and push the lateral containment elements 38 against each other, keeping the lateral containment elements 38 in mutual contact. The angular region 46 defined by the containment surfaces 41 of the lateral containment elements 38 thus contains the softened material, preventing such material from forming a protruding welding seam along the outer edge zone of the welded joint.

During the welding phase, the profiled bar 2 and the further profiled bar 3 are also joined at the internal side faces 22, according to known methods that will not be described in detail.

After the profiled bar 2 and the further profiled bar 3 have been pushed against each other for a desired time, the welding step ends. The product obtained by joining the profiled bar 2 and the further profiled bar 3 can now be removed from the welding head 1.

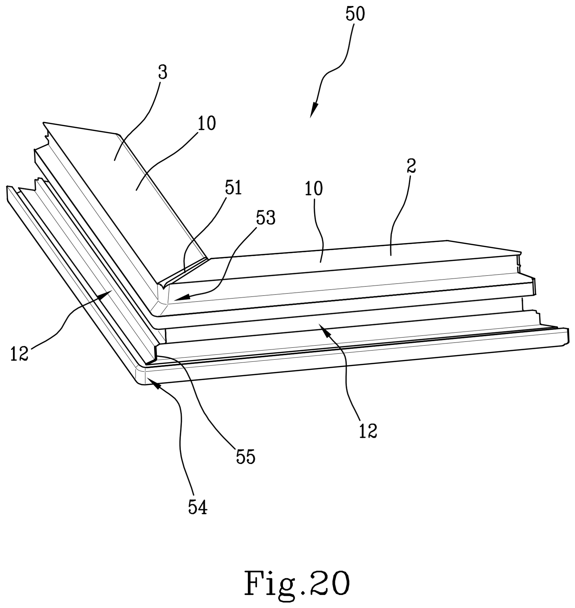

As shown in Figure 20, a joint 50 is formed between profiled bar 2 and further profiled bar 3, where an upper recess 51 with a V-shaped transversal section, that is, a shape complementary to the upper penetrating portion 43, is defined in the joining zone between the first faces 10. The welding seam 45 is not visible from the outside in the joining zone.

Similarly, in the joining zone between the second faces 11, a lower recess is defined, also having a transversal V-shaped transversal section with a shape complementary to the shape of the lower penetrating portion 44 that originated it.

The upper and lower recesses can also have shapes different from the "V" shape. In fact, the shape of the upper recess and the lower recess depends on the shape of the upper protrusions 30 and the lower protrusions 33, so that by changing the shape of the upper protrusions 30 and the lower protrusions 33, the geometry of the upper recess and the lower recess also changes.

In the joining areas between the outer side faces 12, the welding seam 45 is not substantially visible, as the softened material fills the lateral seats 42 and its outer surface is substantially flush with the outer side faces 12.

More precisely, in the joining zone between the outer side faces 12, there may a first edge portion 53 where, thanks to the lateral containment element 38, the welding seam does not protrude outside the outer side faces 12. In the joining area between the outer side faces 12, a second edge portion 54 can also be identified wherein, thanks to the containment protrusion 47, the welding seam does not protrude from the outer side faces 12.

A portion of protruding seam 55 may remain between the first edge portion 53 and the second edge portions 54, but it does not cause any inconvenience because it is not visible after installation.

In the joining zones between the inner side faces 22 the welding seam 45 is, however, visible, but this does not cause any inconvenience because the joining zone between the outer side faces 22 is intended to be covered after the installation of the door or window frame.

By mounting the lower containment elements 26 and the upper containment elements 25 on the arrangement of machine parts 8, instead of on the counter-shapes as was the case in the prior art, it is possible to simplify the structure of the stabilising elements 17.

In fact, as shown in Figure 4, the stabilising elements 17 have no protruding parts above or below the profiled bar to support the upper or lower containment elements. The stabilising elements 17 may have a limited dimension D in a direction which, during operation of the welding head 1, is positioned vertically. This makes available a relatively large space between the supporting base 9 and the presser 14, which makes it possible to increase the dimensional range of the transversal sections of the profiled bars to be welded.

The limited dimensions of the stabilising elements 17 also facilitate their handling, transport and storage.

Further, the stabilising elements 17 are relatively inexpensive, since they do not incorporate the lower containment elements 26 and the upper containment elements 25.

In one version, shown in Figure 2, a containment protrusion 47 suitable for being interposed between the outer side faces 12 in a region close to the second faces 11 can project from each lower containment element 26. The lower containment protrusion 47 prevents the welding seam 45 from protruding outwards from the profiled bars 2, 3 even in a passage between the second faces 11 and the outer side faces 12.

The lower containment protrusions 47 are movable along a direction parallel to the longitudinal axis Z of the corresponding profiled bars 2, 3, together with the lower containment elements 26.

In this way, when the end portions 6, 7 are pushed against each other, the lower containment protrusions 47 slide along the profiled bars 2, 3 without moving away from the latter and without striking the profiled bars 2, 3. According to a version not shown, containment protrusions similar to the lower containment protrusions 47 could be provided on the upper containment elements 26 and/or near the inner side faces 22.

Finally, it should be noted that the upper containment elements 25 and the lower containment elements 26 can be disassembled and replaced with suitable components without protrusions mounted in a fixed manner with respect to the supporting base or the presser (that is, not floating), in the event that it is desired to carry out traditional welds with protruding welding seams. This replacement does not require prolonged machine stoppages, nor particularly complicated operations on the welding head 1.

The welding head 1 is therefore extremely flexible and adaptable to multiple production needs.

## Claims

1. An apparatus for welding profiled bars, comprising:
- a heating plate (24);
- a gripping unit (4) and a further gripping unit (5) each of which is intended to grip an end portion (6, 7) of a profiled bar (2) and, respectively, of a further profiled bar (3) for pushing the end portions (6, 7) against the heating plate (24), or for pushing the end portions (6, 7) against each other, wherein each gripping unit (4, 5) comprises an arrangement of machine parts (8) independent of the geometry of the profiled bars (2, 3) to be welded,
and wherein each gripping unit (4, 5) comprises a stabilising element (17) suitable for engaging with a side face (12) of a profiled bar (2, 3) for keeping the profiled bar (2, 3) in a stable position during the welding,
wherein the gripping unit (4) and the further gripping unit (5) each comprise an upper containment element (25) and a lower containment element (26), the upper containment elements (25) of the gripping unit (4) and of the further gripping unit (5) being positionable in mutual contact during welding, the lower containment elements (26) of the gripping unit (4) and of the further gripping unit (5) being positionable in mutual contact during welding, and wherein each upper containment element (25) and each lower containment element (26) is supported by the arrangement of machine parts (8) independently from the stabilising element (17),
wherein the arrangement of machine parts (8) of each gripping unit (4, 5) comprises a supporting base (9) for restingly receiving the end portion (6, 7) of the corresponding profiled bar (6, 7) and a presser (14) movable towards the supporting base (9) along a movement direction (H), so that the corresponding profiled bar (2, 3) is clamped between the supporting base (9) and the presser (14),
each lower containment element (26) being fixed to the corresponding supporting base (9) in such a way as to be movable with respect to the supporting base (9) transversely to the direction movement direction (H), each upper containment element (25) being fixed to the corresponding presser (14) in such a way as to be movable with respect to the presser (14) transversely to the movement direction (H).

2. The apparatus according to claim 1, wherein each lower containment element (26) is fixed to the corresponding supporting base (9) so as to be movable with respect to the supporting base (9) perpendicularly to the movement direction (H) and each upper containment element (25) is fixed to the corresponding presser (14) so as to be movable with respect to the presser (14) perpendicularly to the movement direction (H).

3. The apparatus according to claim 1 or 2, wherein each lower containment element (26) is fixed to the corresponding supporting base (9) in such a way that it can be moved relative to the supporting base (9) along a direction parallel to a longitudinal axis (Z) of the respective profiled bar (2, 3).

4. The apparatus according to claim 3, wherein an elastic element (28) and a guide element (29) are interposed between each lower containment element (26) and the corresponding supporting base (9), the elastic element (28) extending parallel to the longitudinal axis (Z) of the corresponding profiled bar (2, 3), and the guide element (29) being intended to guide the lower containment element (25) along a direction parallel to the longitudinal axis (Z) of the corresponding profiled bar (2, 3).

5. The apparatus according to any preceding claim, wherein each upper containment element (25) is fixed to the corresponding presser (14) in such a way that it can be moved relative to the presser (14) along a direction parallel to a longitudinal axis (Z) of the respective profiled bar (2, 3).

6. The apparatus according to claim 5, wherein an elastic element (28) and a guide element (29) are interposed between each upper containment element (26) and the corresponding presser (14), the elastic element (28) extending parallel to the longitudinal axis (Z) of the corresponding profiled bar (2, 3), the guide element (29) being intended to guide the upper containment element (26) along a direction parallel to the longitudinal axis (Z) of the corresponding profiled bar (2, 3).

7. The apparatus according to any preceding claim, wherein a containment protrusion (47) projects from each lower containment element (25) and/or from each upper containment element (26) for containing the softened material in a portion of a lateral face (12, 22) of each end section (6, 7).

8. The apparatus according to any preceding claim, wherein the stabilising element (17) of each gripping unit (4, 5) supports a lateral containment element (38) which is movable relative to the stabilising element (17) perpendicular to the movement direction (H), the lateral containment elements (38) of the gripping units (4, 5) being positionable in mutual contact during welding, so as to define an angular region (46) containing the softened material in a joining zone between two outer side faces (12) of the profiled bars (2, 3).

9. The apparatus according to claim 8, wherein the lateral containment element (38) is movable with respect to the stabilising element (17) parallel to a longitudinal axis (Z) of the corresponding profiled bar (2, 3).

10. The apparatus according to claim 8 or 9, wherein an elastic member (39) is interposed between each lateral containment element (38) and the corresponding stabilising element (17) for pushing the lateral containment element (38) away from the stabilising element (17).

11. The apparatus according to any preceding claim, wherein an upper protrusion (33) projects from each upper containment element (26) towards the corresponding profiled bar (2, 3) for being received in an upper seat (36) of the corresponding profiled bar (2, 3) and/or a lower protrusion (30) projects from each lower containment element (25) towards the corresponding profiled bar (2, 3) for being received in a lower seat (37) of the corresponding profiled bar (2, 3).

12. The apparatus according to any preceding claim, wherein each stabilising element (17) is delimited by a coupling surface (18) shaped at least partially to match an outer side face (12) of the corresponding profiled bar (2, 3) to prevent the profiled bar from tilting about its own longitudinal axis (Z).

13. The apparatus according to claim 12, wherein the stabilising element (17) comprises a shaped part (17a) on which the coupling surface (18) is made and a supporting part (17b) which supports the shaped part (17a), the shaped part (17a) being movable vertically relative to the supporting part (17b).

14. The apparatus according to any preceding claim, wherein each arrangement of machine parts (8) comprises a supporting block (19) for removably supporting the corresponding stabilising element (17).
